# EUROPÄISCHE PATENTSCHRIFT

(11) **EP 2 817 527 B1**
(45) Veröffentlichungstag und Bekanntmachung des Hinweises auf die Patenterteilung: **30.12.2015**
(21) Anmeldenummer: 13701428.8
(22) Anmeldetag: 22.01.2013
(51) Int. Cl.: F16D 25/0638

(54) **KUPPLUNGSVORRICHTUNG**
CLUTCH DEVICE
DISPOSITIF DE COUPLAGE

(30) Priorität: 23.02.2012 DE 102012202762
(43) Veröffentlichungstag der Anmeldung: 31.12.2014
(73) Patentinhaber: ZF Friedrichshafen AG, 88046 Friedrichshafen (DE)
(72) Erfinder: KUNDERMANN, Wolfgang, 97422 Schweinfurt (DE)
(86) Internationale Anmeldenummer: PCT/EP2013/051117
(87) Internationale Veröffentlichungsnummer: WO 2013/124105

(56) Entgegenhaltungen:
- EP-A1- 1 729 025
- JP-A- 4 262 125

## Beschreibung

Ausführungsbeispiele der vorliegenden Erfindung befassen sich mit Kupplungsvorrichtungen und insbesondere mit Kupplungsvorrichtungen, die hydraulisch betätigbar sind.

Kupplungsvorrichtungen wie beispielsweise Trennkupplungen sind in einer Vielzahl von Ausführungen bekannt. Unterschieden werden kann hierbei beispielsweise zwischen nasslaufenden Kupplungen und trockenlaufenden Kupplungen, also zwischen Kupplungen, deren Reibbeläge innerhalb eines Ölbades laufen oder zumindest von Öl oder einer Flüssigkeit benetzt sind, und solchen, bei denen die Reibbeläge trocken sind. Eine andere Unterscheidungsmöglichkeit bietet die Art der Betätigung. Diese kann hydraulisch mittels eines Kolbens oder mechanisch, beispielsweise mittels eines auf einen Umlenkhebel wirkenden Seilzugs, erfolgen.

Die Betätigung, also das Öffnen oder das Schließen der Kupplung, um einen Kraftschluss zwischen zwei an die Kupplung angebundenen Komponenten zu unterbrechen oder herzustellen, kann automatisiert oder durch direkte Interaktion eines Benutzers erfolgen, beispielsweise über ein Kupplungspedal in einem Fahrzeug.

Bei hydraulisch betätigbaren Kupplungsvorrichtungen oder Kupplungen wird Hydrauliköl oder eine als Hydrauliköl bzw. Hydraulikflüssigkeit wirkende Flüssigkeit in einen Kolben gepresst, welcher wiederum auf die Reibbeläge der Kupplung, also beispielsweise auf ein Lamellenpaket mit zumindest einem Reibbelag, derart einwirkt, dass die Kupplung geöffnet oder geschlossen wird. Dies kann sich unterscheiden, je nachdem, ob es sich um eine Konstruktion handelt, bei der ohne äußere Krafteinwirkung die Reibbeläge miteinander in Kontakt bzw. Reibeingriff sind oder nicht. Die zur Betätigung des Kolbens verwendete Flüssigkeit wird aus einem Reservoir entnommen und unter Druck in den Kolben gepresst, sodass dieser in die Richtung bewegt wird, die dem mit der Flüssigkeit gefüllten Kolbenvolumen gegenüberliegt.

Meist werden rotationssymmetrische Kolben verwendet, sodass der Kolben durch Befüllen des Kolbenvolumens in eine axiale Richtung parallel zur Symmetrieachse des Kolbens bewegt wird. Bei Fahrzeuggetrieben wird zur Betätigung dieses Kolbens häufig dasselbe Öl verwendet, das im Getriebe für die Schmierung der Zahnräder verwendet wird. Dabei wird das Öl von einer zentralen Pumpe mit unterschiedlichen Drücken verschiedenen Systemkreisläufen des Komplexes Getriebe/Kupplung des Antriebsstrangs zur Verfügung gestellt. Bei Hydraulikkupplungen, deren Kolben innerhalb des Antriebsstranges rotieren, werden häufig ferner so genannte Ausgleichsvolumina bzw. Ausgleichsräume vorgesehen, die dazu dienen, den durch die Rotation in der innerhalb des Kolbenvolumens befindlichen Flüssigkeit erzeugten Überdruck zu kompensieren. Ohne eine derartige Kompensation könnte eine hohe Rotationsgeschwindigkeit im Extremfall dazu führen, dass eine normal offene Kupplung permanent leicht schleift. Andererseits könnte eine vollständig nasslaufende Kupplung bzw. das in der nasslaufenden Kupplung enthaltene Ölvolumen dazu führen, dass aufgrund des durch die Rotation verursachten Überdrucks in dem die Reibbeläge umschließenden Ölvolumen die Betätigung des Kolbens, der gegen diesen Druck betätigt werden muss, behindert wird. Durch beide Effekte wird das Ansprechverhalten der Kupplung verschlechtert bzw. es ergibt sich ein drehzahlabhängiges Ansprechverhalten der Kupplung, was unerwünscht ist.

Üblicherweise schließt sich das Ausgleichsvolumen bzw. der Ausgleichsraum auf der von dem Kolbenvolumen abgewandten Seite des Kolbens unmittelbar an den Kolben an, sodass ein in dem Ausgleichsraum durch die Rotation erzeugter Druck denjenigen Druck kompensiert, der im Kolbenvolumen selbst erzeugt wird. Dies führt zu einer Reduzierung des Einflusses des durch die Rotation verursachten Druckes. Um diesen Effekt zu erzielen, muss eine Flüssigkeit in das Ausgleichsvolumen gebracht werden, d.h., der Ausgleichsraum muss befüllt werden. Dies wiederum dauert eine Zeitspanne, während derer eine Kompensation der Drücke nicht möglich ist, während derer also das Ansprechverhalten der Kupplung schlecht ist. Dies kann insbesondere bei Fahrzeugen mit Start-Stopp-Automatik nachteilig sein, da hier der Motor häufig angehalten wird. Dies führt wiederum dazu, dass das Öl aus dem Ausgleichsraum zumindest teilweise zurück in das Getriebe fließt. Da bei solchen Fahrzeugen der Motor erst dann wieder anläuft, wenn ein Beschleunigen bzw. ein Anfahren gewünscht ist, erfolgt das Betätigen der Kupplung bzw. der Kupplungsvorrichtung in der Regel unmittelbar nach Starten des Motors. Zu diesem Zeitpunkt ist bei herkömmlichen Lösungen der Ausgleichsraum noch nicht wieder vollständig mit Flüssigkeit befüllt, was zu einem schlechten Ansprechverhalten der Kupplung und beispielsweise zu einem schlechten Anfahren des Fahrzeugs führen kann.

Aus der EP 1 729 025 A1 geht eine Doppelkupplungsvorrichtung hervor, bei der der erste Ausgleichsraum und der zweite Ausgleichsraum miteinander fluidverbunden sind. Zwischen dem Kolben der inneren Kupplung und dem Ausgleichsraum befindet sich ein Kanal, der die Ausgleichsräume miteinander verbindet und Fluid vom inneren Ausgleichsraum zum äußeren Ausgleichsraum leitet.

Es ist also wünschenswert, die Zeit für ein Wiederbefüllen des Ausgleichsraums zu verringern.Dies wird ermöglicht, indem in einer Kupplungsvorrichtung mit einem hydraulisch betätigbaren, in einer axialen Richtung beweglichen Kolben der Ausgleichsraum, der auf der dem Kolbenvolumen gegenüberliegenden Seite des Kolbens angeordnet ist, nicht unmittelbar an den Kolben angrenzt. Vielmehr befindet sich in der axialen Richtung zwischen dem Kolbenvolumen und dem Ausgleichsraum ein zusätzlicher Totraum. Das heißt, der Ausgleichsraum grenzt nicht unmittelbar an den Kolben, sodass also der Kolben keine Begrenzungsfläche für das von dem Ausgleichsraum gebildete Volumen bildet. Durch die Anordnung eines abgedichteten Totraums zwischen dem Kolbenvolumen und dem Ausgleichsraum kann selbst bei einer vollständig nasslaufenden Kupplung die Geometrie des Ausgleichsraums losgelöst von der teils komplexen Geometrie eines in rotationssymmetrischen Kupplungsvorrichtungen oft verwendeten Ringkolbens gewählt werden. Dadurch kann das gesamte vom Ausgleichsraum gebildete Volumen ohne Verlust der Funktionalität desselben verkleinert werden, was zu einer kurzen Zeit für das Befüllen des Ausgleichsraumes nach vollständigem Stillstand des Motors oder einer verwendeten Pumpe führen kann, also dem Wiederbefüllen nach Leerlaufen.

Dies wird unter anderem dadurch erreicht, dass der Totraum sowohl bezüglich des Ausgleichsraums als auch bezüglich des Kolbenvolumens abgedichtet ist, sodass dessen Volumen nicht über die mit dem Ausgleichsraum und dem Kolbenvolumen jeweils verbundenen Zuläufe für Hydraulikflüssigkeit oder Öl mitbefüllt wird. Das Einfügen eines Totraums zwischen dem Kolbenvolumen und dem Ausgleichsraum führt dazu, dass eine kurze Zeit für die Wiederbefüllung des Ausgleichsraums erzielt werden kann, selbst wenn auch die Geometrie des Kolbenvolumens selbst hinsichtlich des zu befüllenden Volumens optimiert ist.

Um auch das Kolbenvolumen günstig zu gestalten, wird gemäß einigen Ausführungsbeispielen, bei denen das Kolbenvolumen sowohl vom Kolben als auch von einer Gehäusewand der Kupplungsvorrichtung begrenzt wird, die Form des Kolbens und die Form der Gehäusewand derart aufeinander angepasst, dass das von einer Flüssigkeit zu befüllende Volumen bei einem sich in einer Anfangsposition bzw. einer Ruhelage befindlichem Kolben gering ist.

Zu diesem Zweck werden gemäß einigen Ausführungsbeispielen die Konturen bzw. Formen der Oberflächen des Kolbens und der Gehäusewand aufeinander angepasst, sodass diese zumindest abschnittsweise parallel zueinander verlaufen. Mit anderen Worten ist eine Form der das Kolbenvolumen in- und entgegen der axialen Richtung begrenzenden Bereiche des Kolbens und der Gehäusewand derart aufeinander angepasst, dass ein Verhältnis eines maximalen Kolbenvolumens bei einem in einer axialen Endposition befindlichen Kolben zu einem minimalen Kolbenvolumen bei einem in einer axialen Anfangsposition befindlichen Kolben größer als 3, vorzugsweise 10 ist. Dabei ist als eine das maximale Kolbenvolumen definierende axiale Endposition diejenige Position des Kolbens zu verstehen, an der der Kolben seinen maximalen Hub erreicht hat. Dieser kann beispielsweise geometrisch durch einen Anschlag oder andere bekannte Maßnahmen begrenzt sein. Der maximale Hub wird beispielsweise durch das Lüftspiel der Lamellen und den auftretenden Verschleiß, sowie durch Toleranzen bestimmt, den Anschlag stellt üblicherweise das komplett zusammengedrückte Lamellenpaket dar. Äquivalent dazu ist als Anfangs- bzw. Ruheposition diejenige Position zu verstehen, in die der Kolben, beispielsweise durch eine äußere Federkraft oder ähnliches, zurückkehrt, wenn aus dem Inneren des Kolbenvolumens keine Kraft auf den Kolben ausgeübt wird. Die Anfangsposition ist also die Ruhelage des Kolbens. Durch gezielte Dimensionierung des Kolbenvolumens kann erreicht werden, dass das Verhältnis des maximalen Kolbenvolumens zu dem minimalen Kolbenvolumen groß wird, beispielsweise größer als 3, insbesondere größer als 5 oder 10 oder sogar größer als 20, 50 oder 100.

Durch das Einfügen des Totraums zwischen das Kolbenvolumen bzw. den Kolben und den Ausgleichsraum wird es fernerhin ermöglicht, die radialen Positionen der das Kolbenvolumen und den Ausgleichsraum in der radialen Richtung nach außen begrenzenden Mantelflächen, die das Auftreten der durch die Rotation verursachten Drücke beeinflussen, ähnlich zu wählen. Gemäß einigen Ausführungsbeispielen ist der Unterschied zwischen der radialen Position einer ersten Mantelfläche, die das Kolbenvolumen radial nach außen begrenzt, und einer zweiten Mantelfläche, die den Ausgleichsraum in der radialen Richtung nach außen begrenzt, geringer als 10% bzw. sogar geringer als 5% oder 3%.

Um entgegen der axialen Richtung eine Kraft auf den Kolben übertragen zu können, ist bei einigen Ausführungsbeispielen die dem Kolben zugewandte Begrenzungsfläche des Ausgleichsraums bezüglich dem Kolben zumindest axial festgelegt. Das heißt, diese sind derart miteinander verbunden, dass die dem Kolben zugewandte Begrenzungsfläche des Ausgleichsraums zusammen mit dem Kolben in der axialen Richtung bewegt wird. Gleichzeitig kann die dem Kolben zugewandte Begrenzungsfläche des Ausgleichsraums eine Kraft auf den Kolben übertragen, d. h. mit anderen Worten, die Verbindung zwischen dem Ausgleichsraum und dem Kolben ist im Betrieb in und entgegen der axialen Richtung starr und unflexibel.

Gemäß einigen Ausführungsbeispielen der Erfindung wird diese starre Verbindung zusätzlich dazu genutzt, eine Rückstellkraft auf den Kolben zu übertragen. Gemäß einigen Ausführungsbeispielen ist zu diesem Zweck eine Tellerfeder innerhalb des Ausgleichsraums angeordnet, die eine entgegen der axialen Richtung wirkende Kraft auf die dem Kolben zugewandte Begrenzungsfläche des Ausgleichsraums ausübt. Alternativ kann natürlich auch eine Mehrzahl von Schraubendruckfedern verwendet werden. Zusätzlich wirkt im Betrieb der Fliehkraftdruck im Ausgleichsraum über die Begrenzungsfläche des Ausgleichsraums auf den Kolben. Vorteilhaft hierbei ist, dass die Verbindung im Betrieb zwar starr ist, die einzelnen Bauteile jedoch lediglich ineinandergesteckt oder geschoben werden können, ohne selbst fest miteinander verbunden werden zu müssen.

Zur Optimierung des Volumens des Ausgleichsraums sind dessen den Ausgleichsraum in der axialen Richtung begrenzende Flächen, also die dem Kolben zugewandte Begrenzungsfläche des Ausgleichsraums und ein den Ausgleichsraum in der axialen Richtung begrenzender Ausgleichsraumdeckel derart aufeinander angepasst, dass das Volumen des Ausgleichsraums auch dann gering ist, wenn sich der Kolben in der Anfangsposition befindet. Das heißt, die Form der den Ausgleichsraum in und entgegen der axialen Richtung begrenzenden Bereiche des Ausgleichsraumdeckels und der dem Kolben zugewandten Begrenzungsfläche des Ausgleichsraums sind derart aufeinander angepasst, dass das Verhältnis des maximalen Ausgleichsraumvolumens, das sich ergibt, wenn sich der Kolben in der axialen Anfangsposition befindet, zu einem minimalen Ausgleichsraumvolumen, das sich ergibt, wenn der Kolben in der Endposition befindet, groß ist. Gemäß einigen Ausführungsbeispielen kann dies beispielsweise in der Größenordnung von 2 sein, sodass beim Wiederbefüllen nach Leerlaufen des Ausgleichsraums in der Anfangsposition ein geringes Volumen an Öl bis zur vollständigen Befüllung des Ausgleichsraums erforderlich ist. Für den Aspekt der Wiederbefüllung nach Leerlaufen wäre das aufzufüllende Volumen bestenfalls gleich oder nur wenig größer der Differenz zwischen dem minimalen Ausgleichsraumvolumen und dem maximalen Ausgleichsraumvolumen, also dem Volumen welches durch die Kolbenbewegung verschoben wird. Je kleiner das minimale Ausgleichsraumvolumen bei konstantem Verschiebevolumen ist, desto kleiner ist das Volumen beim Wiederbefüllen nach Leerlaufen und desto größer ist das angesprochene Verhältnis. Auf der anderen Seite ist jedoch zu berücksichtigen, dass bei sehr großem Verhältnis, beim Zurückfahren des Kolbens nur wenig Restvolumen im Ausgleichsraum zurückbleibt, welches sich durch Fliehkraft radial außen ansammelt und die wirksame Fliehkraftdruckfläche stark reduziert, wenn die Befüllung des Fliehkraftausgleichsraums dem Kolbenweg nicht folgen kann. Optimal für diesen Aspekt wäre demnach ein sehr großes Ausgleichsraumvolumen, also ein kleines Verhältnis. Für die Praxis hat sich ein Wertebereich zwischen 2 und 5 für das Verhältnis als optimaler Kompromiss zwischen den beiden konträren Anforderungen herausgestellt.

Bevorzugte Ausführungsbeispiele der vorliegenden Erfindung werden nachfolgend, Bezug nehmend auf die beigefügten Figuren, näher erläutert. Es zeigen:
Fig. 1 eine Schnittansicht durch ein Ausführungsbeispiel einer erfindungsgemäßen Kupplungsvorrichtung, bei der sich der Kolben in der Anfangsposition befindet;
Fig. 2 eine Schnittansicht durch die Kupplungsvorrichtung von Fig. 1, bei der sich der Kolben in der axialen Endposition befindet; und
Fig. 3 eine Schnittansicht durch das Ausführungsbeispiel der Fig. 1 und 2 während der Montage.

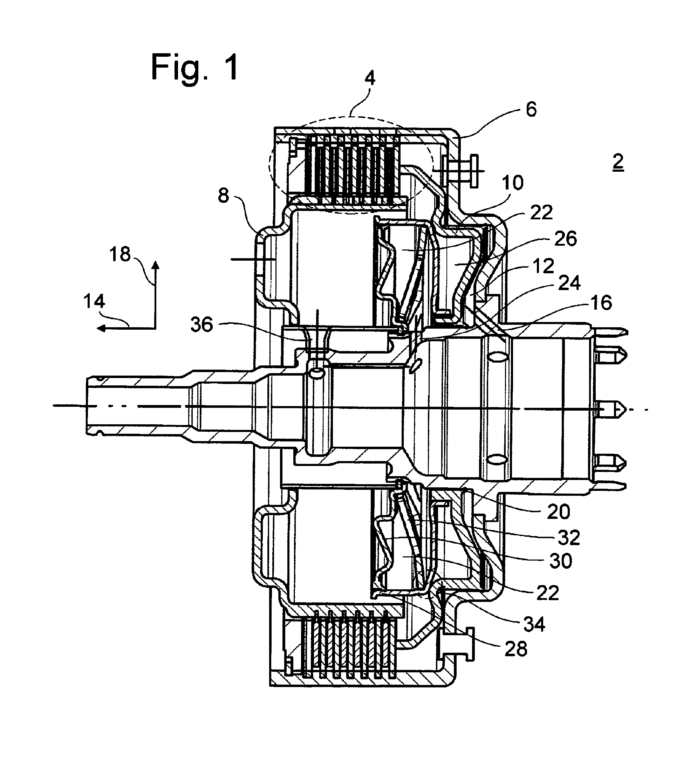

Fig. 1 zeigt einen Schnitt durch ein Ausführungsbeispiel einer erfindungsgemäßen Kupplungsvorrichtung 2.

Die Kupplungsvorrichtung 2 weist vorliegend ein Lamellenpaket 4 mit einer Mehrzahl von Reibbelägen auf. Die äußeren Lamellen sind mit einem Außenlamellenträger 6 und die inneren Lamellen mit einem Innenlamellenträger 8 mittels einer geraden Verzahnung verbunden.

Es können entweder die Außenlamellen oder die Innenlamellen oder beide jeweils zumindest einen Reibbelag aufweisen, sodass ein Kraftschluss zwischen dem Außenlamellenträger 6 und dem Innenlamellenträger 8 erzielt werden kann, wenn das Lamellenpaket 4 mittels des rotationssymmetrischen Kolbens bzw. des Ringkolbens 10 zusammengedrückt wird. Dadurch geraten die Lamellen mit den Reibbelägen in Eingriff, um eine kraftschlüssige drehfeste Verbindung zwischen dem Innenlamellenträger 8 und dem Außenlamellenträger 6 herzustellen.

Der Außenlamellenträger 6, der vorliegend ein Teil des Gehäuses der Kupplungsvorrichtung ist, kann beispielsweise mittels Flex-Plates oder dergleichen an dem Motor angebunden werden, wohingegen der Innenlamellenträger 8 über eine Nabe mit dem Getriebe verbindbar ist. Selbstverständlich ist es auch denkbar, die Anbindung zu vertauschen, also den Außenlamellenträger 6 mit dem Getriebe drehfest zu verbinden. Auf eine vertiefende Beschreibung der an sich bekannten Funktionalität der nasslaufenden Mehrscheibenkupplung von Fig. 1 wird im Folgenden verzichtet, um sich auf die für die Erfindung wesentlichen Merkmale des Kolbens 10 sowie dessen Anbindung an einen Ausgleichsraum 22 zu konzentrieren. Der bezüglich einer axialen Richtung 14 rotationssymmetrische Kolben 10 wird betätigt, indem in das Kolbenvolumen 12 über einen Zulauf 16, der mit einem hydraulischen Kupplungskreislauf verbunden ist, Hydraulikflüssigkeit gepresst wird. Das Kolbenvolumen 12 wird vorliegend in der axialen Richtung 14 von dem Kolben 10 selbst und entgegen der axialen Richtung 14 von der Gehäusewand 6 der Kupplungsvorrichtung 2 begrenzt. Dabei sind die das Kolbenvolumen 12 begrenzenden Bereiche des Kolbens 10 und der Gehäusewand 6 zumindest abschnittsweise zueinander parallel, sodass der Kolben, wenn er sich in der in Fig. 1 gezeigten Anfangsposition bzw. Ruhelage befindet, einerseits vollflächig mit dem Druck der Flüssigkeit in dem Kolbenvolumen beaufschlagt wird und gleichzeitig ein vergleichsweise geringes Kolbenvolumen bildet, welches von einer Hydraulikpumpe schnell befüllt werden kann. Eine weitere vorteilhafte Ausgestaltung sieht vor, dass die auf dem Kolben 10 aufgebrachte Dichtung so ausgestaltet ist, dass das in Figur 1 verbliebenen Kolbenvolumen von der Dichtung weitgehend ausgefüllt wird, wobei die Dichtlippe 20 aber einen entsprechenden Freiraum zur Funktionserfüllung benötigt.

Um das Kolbenvolumen 12 gegen den Kolben 10 abzudichten, weist der Kolben 10 an seinem in der radialen Richtung 18 inneren und äußeren Ende angespritzte Dichtlippen 20 auf. Bei dem in Fig. 1 gezeigten Ausführungsbeispiel ist der Ausgleichsraum 22, der mittels eines mit einem Flüssigkeitskreislauf verbundenen Zulaufs 24 mit einer Flüssigkeit befüllbar ist, von dem Kolben 10 durch einen zwischen dem Kolbenvolumen 12 und dem Ausgleichsraum 22 angeordneten Totraum 26 getrennt. Der Ausgleichsraum 22 selbst wird von einem dem Kolben zugewandten Zwischenblech 28, das sowohl die dem Kolben 10 zugewandte Begrenzungsfläche als auch eine radial äußere Mantelfläche bildet und von einem Ausgleichsraumdeckel 30 begrenzt. Der Ausgleichsraumdeckel 30 ist axial bezüglich der gemeinsamen Nabe festgelegt, also axial nicht beweglich, wohingegen das Zwischenblech 28 an seinem radial inneren Ende auf den Kolben gesteckt ist und an seinem radialen äußeren Ende auf dem Kolben 10 aufliegt, sodass das Zwischenblech 28 in die axiale Richtung 14 bewegt wird, wenn der Kolben 10 sich in diese Richtung bewegt. Eine Tellerfeder 32 ist radial innen liegend in der axialen Richtung 14 fixiert und drückt auf das radial äußere, dem Kolben zugewandte Ende des Zwischenblechs 28, sodass mittels der Tellerfeder 32 eine Rückstellkraft auf den Kolben 10 ausgeübt wird, welche diesen zurück in die in Fig. 1 gezeigte Ausgangslage bzw. Anfangsposition bringt, wenn der Druck in dem Kolbenvolumen 12 abgebaut wird.

Das Zwischenblech 28 ist, wie bereits im Vorhergehenden beschrieben, an seiner radial innen liegenden Seite auf den Kolben 10 gesteckt und bezüglich diesem abgedichtet. An der radial außen liegenden Kontaktfläche zwischen dem Zwischenblech 28 und dem Kolben 10 ist ferner eine abdichtende Gummierung bzw. eine andersartig hergestellte Dichtung vorgesehen, sodass der sich zwischen dem Kolbenvolumen 12 und dem Ausgleichsraum 22 ergebende Totraum 26 sowohl bezüglich des Ausgleichsraums 22 als auch bezüglich des Kolbenvolumens 12 abgedichtet ist. Somit muss dieser bei einer Wiederbefüllung des Ausgleichsraums 22 durch den Zulauf 24 nicht mit befüllt werden, was die Zeit für die Wiederbefüllung des Ausgleichsraums mit Öl nach einem Motorstillstand oder dergleichen erheblich verkürzt. Ferner kann die Geometrie des Ausgleichsraums 22 völlig losgelöst von der Geometrie des Kolbens 10 gewählt werden.

Um bei einer eventuellen Erwärmung der Luft oder des Mediums im Totraum 26 einen Ausgleich des Drucks zu ermöglichen, kann bei einigen Ausführungsbeispielen in dem Dichtbereich 34 eine begrenzte Anzahl von Kapillaren oder dünnen Kanälen vorgesehen sein, durch die erforderlichenfalls ein Druckausgleich des Mediums im Totraum 26 erfolgen kann. Da es sich bei dem in Fig. 1 gezeigten Ausführungsbeispiel um eine Kupplungsvorrichtung mit nasslaufendem Lamellenpaket 4 handelt, weist die gemeinsame Nabe der Kupplungsanordnung ferner zumindest eine in einen Kanal 36 mündende Bohrung auf, mittels derer Öl bzw. eine Flüssigkeit auf das Lamellenpaket 4 geleitet werden kann. Hierbei sei der Vollständigkeit halber angemerkt, dass ein potentiell in den Totraum 26 eindringendes Öl oder eine dort eindringende Flüssigkeit unschädlich ist, da deren erzeugter Druck zu gleichen Teilen sowohl auf das Kolbenvolumen 12 als auch auf den Ausgleichsraum 22 wirken würde. Die Kompensation der durch Fliehkraft verursachenden Drücke durch den Ausgleichsraum 22 kann also nicht beeinträchtigt werden, selbst wenn in den abgedichteten Totraum 26 zusätzliche Flüssigkeit einträte.

Um eine näherungsweise vollständige Kompensation des durch eine Rotation erzeugten Druckes in der Flüssigkeit im Kolbenvolumen 12 zu erreichen, ist eine Position einer äußeren Mantelfläche des das Kolbenvolumen 12 begrenzenden Gehäuses 6 näherungsweise an derselben radialen Position angeordnet, wie die äußere Mantelfläche des Zwischenblechs 28, die den Ausgleichsraum in der radialen Richtung nach außen begrenzt.

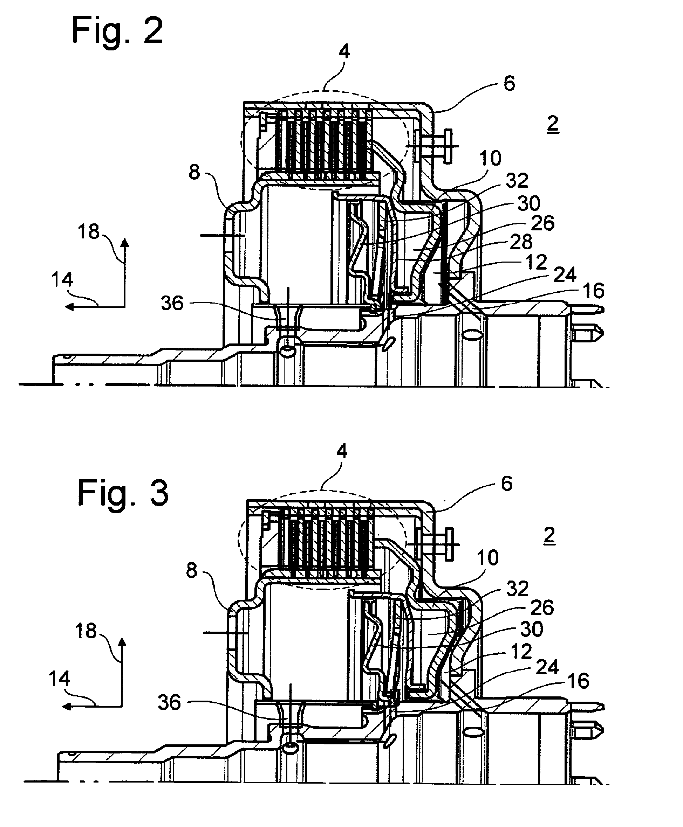

Fig. 2 zeigt einen Schnitt durch die obere Hälfte der bereits in Fig. 1 gezeigten Kupplungsvorrichtung, wobei sich bei der in Fig. 2 dargestellten Konfiguration der Kolben 10 in der axialen Endposition befindet, also den maximal konstruktiv vorgegebenen Kolbenhub zurückgelegt hat. In der Darstellung ist die axiale Erstreckung des Lamellenpaketes gegenüber Figur 1 nicht geändert, sodass der Kolben zeichnerisch mit dem Lamellenpaket überlappt. Die gezeigte Kolbenstellung entspricht dem größtmöglich zurückgelegten Verschiebeweg, welcher die maximalen Toleranzen, den größtmöglichen Verschleiß und das maximale Lüftspiel des Lamellenpaketes berücksichtigt. Das heißt, das in Fig. 2 dargestellte Kolbenvolumen 12 entspricht dem maximalen möglichen Kolbenvolumen, wohingegen das in Fig. 1 dargestellte Kolbenvolumen 12 dem minimal möglichen Kolbenvolumen entspricht, da sich in Fig. 1 der Kolben 10 in seiner Anfangsposition befindet.

Das zu dem Kolbenvolumen 12 gesagte gilt äquivalent auch für den Ausgleichsraum 22 bzw. für das von ihm umschlossene Volumen, da sich das Volumen des Ausgleichsraums 22 umgekehrt proportional zu dem Kolbenvolumen 12 verhält. Bei der in Fig. 2 dargestellten Konfiguration, bei der sich der Kolben in der axialen Endposition befindet, entspricht das von dem Ausgleichsraum 22 umschlossene Volumen also einem minimalen Ausgleichsraumvolumen, während in Fig. 1 das maximale Ausgleichsraumvolumen dargestellt ist. Bei einigen Ausführungsbeispielen kann durch die Anordnung eines zusätzlichen Totraums zwischen Kolbenvolumen 12 und Ausgleichsraum 22 ein Verhältnis des maximalen Ausgleichsraumvolumens zum minimalen Ausgleichsraumvolumen erzielt werden, das größer als 2 und kleiner als 5, bevorzugt kleiner als 3 ist.

Fig. 3 zeigt die Kupplungsvorrichtung während der Montage. Die beispielsweise aus kaltverformten Blechen gebildeten Komponenten, insbesondere die Gehäusewand 6, der Kolben 10 sowie das Zwischenblech 28 und der Ausgleichsraumdeckel 30 werden während der Montage entgegen der axialen Richtung 14 in das vormontierte Gehäuse 6 gesteckt. Fig. 3 zeigt eine Konfiguration, bei der der Ausgleichsraumdeckel 30 bereits auf die Nabe gesteckt wurde, wobei dieser soweit entgegen der axialen Richtung 14 bewegt wird, dass durch den Ausgleichsraumdeckel 30 die Tellerfeder 32 radial innen soweit gedrückt wird, bis eine Nut in der Nabe freigelegt wird, in die ein Sprengring eingebracht werden kann. Nach dem Loslassen des Ausgleichsraumdeckels 30 verhindert der von der Tellerfeder zurückgeschobene Ausgleichsraumdeckel 30 selbst ein rotationsbedingtes Aufweiten und ein daraus resultierendes Lösen des Sprengrings.

Mit anderen Worten zeigen die Fig. 1 bis 3 die Möglichkeit der Verringerung des Ausgleichsraumvolumens durch Anbringen eines Totraums 26 zwischen dem Kolbenvolumen 12 und dem Ausgleichsraum 22. Hierbei wird die Funktion der Außendichtung des Ausgleichsraums 22 auf den Ausgleichsraumdeckel 30 übertragen, der eine anvulkanisierte Lippendichtung aufweist, die an einer Dichtungslauffläche am Zwischenblech 28 anläuft. Das Zwischenblech 28 hat fernerhin die Funktion der Zentrierung der Tellerfeder 32 und ist selbst auf einer Gummierung im radial innen liegenden Bereich des Kolbens 10 zentriert und gegen den Kolben 10 abgedichtet. Eine solche Gummierung kann beim Herstellen der beiden anvulkanisierten Druckraumdichtungen 20 am Kolben 10 selbst in demselben Werkzeug um den Kolbenfuß herum mit angespritzt werden, sodass kein Montagemehraufwand entsteht.

Dadurch entsteht ein möglicherweise luftgefüllter Totraum 26 zwischen dem Kolben und dem Zwischenblech 28. Ein solches Volumen muss bei der Befüllung des Ausgleichsraums 22 nicht mitbefüllt werden. Die Entlüftung des Totraums 22 bei zunehmender Temperatur kann über einen oder mehrere Schlitze im Kolbenblech und/oder im Zwischenblech innerhalb des Dichtungsbereichs 34 sowie auf andere Art und Weise erfolgen. Bei der in Fig. 2 gezeigten Schließstellung des Kolbens 10 wird das Zwischenblech 28, das sich in etwa auf Höhe des Außendurchmessers der Tellerfeder 32 am Kolben 10 abstützt, mit verschoben. Die Tellerfeder 32 drückt bei einer Druckentlastung des Kolbenvolumens 12 das Zwischenblech 28 und den Kolben 10 wieder in die Ausgangsstellung von Fig. 1 zurück.

Bei der in Fig. 3 gezeigten Montage des Ausgleichsraumdeckels 30 mittels eines Sprengrings wird der Ausgleichsraumdeckel 30 mit der Außendichtung in das bereits montierte Zwischenblech 28 eingeschoben und zentriert sich darüber über eine Mittelbohrung an der Nabe. Dabei wird die Tellerfeder 32 radial innen soweit gedrückt, dass sich ein kleiner Sprengring in die Nabe montieren lässt. Die Tellerfeder 32 drückt den Ausgleichsraumdeckel 30 nach Entfernen der Montagekraft gegen den Sprengring. Durch die in den Fig. 1 bis 3 dargestellte Form des Ausgleichsraumdeckels 30 wird damit auch eine formschlüssige Fliehkraftsicherung des Sprengrings erreicht. Um eine Beschädigung der Anlauffläche für die Dichtung des Ausgleichsraumdeckels 30 bei der Montage auszuschließen, kann bei einigen Ausführungsbeispielen der Zentrierdurchmesser für die Tellerfeder 32 innerhalb des Zwischenblechs 28 kleiner ausgeführt sein als der Durchmesser der Laufbahn der Dichtung.

Wenngleich Ausführungsbeispiele der vorliegenden Erfindung in den vorhergehenden Absätzen überwiegend am Beispiel einer nasslaufenden Trennkupplung diskutiert wurden, versteht es sich von selbst, dass weitere Ausführungsbeispiele auch in anderen Kupplungskonzepten bzw. Kupplungsvorrichtungen verwendet werden können. Dies können beispielsweise auch trockenlaufende hydraulisch betätigte Trennkupplungen sein sowie Kupplungen, die in automatisierten Getrieben oder in Doppelkupplungsgetrieben verwendet werden. Selbstverständlich können auch Trennkupplungen zwischen einem elektromotorisch und einem mit einem Verbrennungsmotor betriebenen Teil eines Antriebsstranges eines Fahrzeuges Ausführungsbeispiele der vorliegenden Erfindung sein.

### Bezugszeichen

- 2: Kupplungsvorrichtung
- 4: Lamellenpaket
- 6: Außenlamellenträger
- 8: Innenlamellenträger
- 10: Kolben
- 12: Kolbenvolumen
- 14: axiale Richtung
- 16: Zulauf
- 18: radiale Richtung
- 20: Dichtlippe
- 22: Ausgleichsraum
- 24: Zulauf
- 26: Totraum
- 28: Zwischenblech
- 30: Ausgleichsraumdeckel
- 32: Tellerfeder
- 34: Dichtbereich
- 36: Kanal

## Patentansprüche

1. Kupplungsvorrichtung (2), mit folgenden Merkmalen:
einem hydraulisch betätigbaren, durch Befüllen eines Kolbenvolumens (12) mit einer Flüssigkeit in einer axialen Richtung (14) beweglichen Kolben (10);
ein von dem Kolben (10) betätigbares Lamellenpaket (4) mit zumindest einem Reibbelag;
einem abgeschlossenen Ausgleichsraum (22), der auf einer dem Kolbenvolumen (12) gegenüberliegenden Seite des Kolbens (10) angeordnet und mit einer Flüssigkeit befüllbar ist, wobei in der axialen Richtung (14) zwischen dem Kolbenvolumen (12) und dem Ausgleichsraum (22) ein Totraum (26) angeordnet ist **dadurch gekennzeichnet, dass** der Totraum (26) sowohl bezüglich des Ausgleichsraumes (22) als auch bezüglich des Kolbenvolumens (12) abgedichtet ist.

2. Kupplungsvorrichtung (2) nach Anspruch 1, **dadurch gekennzeichnet, dass** es sich um eine Kupplungsvorrichtung (2) mit nasslaufenden Reibbelägen handelt.

3. Kupplungsvorrichtung (2) nach einem der vorhergehenden Ansprüche, **dadurch gekennzeichnet, dass** der Ausgleichsraum (22) zumindest einen mit einem Flüssigkeitskreislauf verbundenen Zulauf (24) für die Flüssigkeit aufweist, um den Ausgleichsraum (22) mit der Flüssigkeit zu befüllen.

4. Kupplungsvorrichtung (2) nach einem der vorhergehenden Ansprüche, bei der der Kolben (10) ein bezüglich der axialen Richtung (14) rotationssymmetrischer Ringkolben ist, wobei das Kolbenvolumen (12) in der axialen Richtung (14) von dem Ringkolben und entgegen der axialen Richtung (14) von einer Gehäusewand (6) der Kupplungsvorrichtung (2) begrenzt wird.

5. Kupplungsvorrichtung (2) nach Anspruch 4, bei der eine Form der das Kolbenvolumen (12) in und entgegen der axialen Richtung (14) begrenzenden Bereiche des Kolbens (10) und der Gehäusewand (6) derart aufeinander angepasst ist, dass ein Verhältnis eines maximalen Kolbenvolumens (12) bei einem in einer axialen Endposition befindlichen Kolben (10) zu einem minimalen Kolbenvolumen (12) bei einem in einer axialen Anfangsposition befindlichem Kolben (10) größer als 3 ist.

6. Kupplungsvorrichtung (2) nach einem der vorhergehenden Ansprüche, bei der das Kolbenvolumen (12) zumindest einen mit einem Kupplungskreislauf verbundenen Zulauf (16) aufweist, um das Kolbenvolumen (12) mit der Flüssigkeit zu befüllen.

7. Kupplungsvorrichtung (2) nach einem der vorhergehenden Ansprüche, bei der eine das Kolbenvolumen (12) in einer zur axialen Richtung (14) senkrechten radialen Richtung (18) nach außen begrenzende erste Mantelfläche sich an einer radialen Position befindet, die weniger als 5% von einer radialen Position einer zweiten Mantelfläche abweicht, welche den Ausgleichsraum (22) in der radialen Richtung nach außen begrenzt.

8. Kupplungsvorrichtung (2) nach einem der vorhergehenden Ansprüche, **dadurch gekennzeichnet, dass** die dem Kolben (10) zugewandte Begrenzungsfläche des Ausgleichsraumes (22) in der axialen Richtung (14) bezüglich dem Kolben (10) festgelegt ist, sodass diese in der axialen Richtung (14) zusammen mit dem Kolben (10) bewegt wird.

9. Kupplungsvorrichtung (2) nach einem der vorhergehenden Ansprüche, **dadurch gekennzeichnet, dass** in dem Ausgleichsraum (22) eine Tellerfeder (32) angeordnet ist.

10. Kupplungsvorrichtung (2) nach Anspruch 8 und 9, bei der die dem Kolben (10) zugewandte Begrenzungsfläche des Ausgleichsraumes (22) von der Tellerfeder (32) entgegen der axialen Richtung (14) gegen den Kolben (10) gepresst wird.

11. Kupplungsvorrichtung (2) nach einem der Ansprüche 8 bis 10, bei der ein den Ausgleichsraum (22) in der axialen Richtung (14) begrenzender Ausgleichsraumdeckel in der axialen Richtung (14) unbeweglich ist.

12. Kupplungsvorrichtung (2) nach Anspruch 11, bei der der Ausgleichsraumdeckel bezüglich der axialen Richtung (14) rotationssymmetrisch ist und am radial äußeren Umfang eine vollständig umlaufende Dichtung aufweist.

13. Kupplungsvorrichtung (2) nach Anspruch 11 oder 12, bei der eine Form der den Ausgleichsraum (22) in und entgegen der axialen Richtung (14) begrenzenden Bereiche des Ausgleichsraumdeckels und der dem Kolben (10) zugewandte Begrenzungsfläche des Ausgleichsraumes (22) derart aufeinander angepasst ist, dass ein Verhältnis eines maximalen Ausgleichsraumvolumens bei einem in der axialen Endposition befindlichen Kolben (10) zu einem minimalen Ausgleichsraumvolumen bei einem in axialer Anfangsposition befindlichem Kolben (10) größer als 2 und kleiner als 5 ist.

## Claims

1. Clutch device (2), having the following features:
a hydraulically actuable piston (10) which can be moved in an axial direction (14) as a result of a piston volume (12) being filled with a liquid;
a multiple disc assembly (4) which can be actuated by the piston (10) and has at least one friction lining;
a closed compensation space (22) which is arranged on a side of the piston (10), which side lies opposite the piston volume (12), and can be filled with a liquid, a dead space (26) being arranged in the axial direction (14) between the piston volume (12) and the compensation space (22), **characterized in that** the dead space (26) is sealed both with regard to the compensation space (22) and with regard to the piston volume (12).

2. Clutch device (2) according to Claim 1, **characterized in that** it is a clutch device (2) with wet-running friction linings.

3. Clutch device (2) according to one of the preceding claims, **characterized in that** the compensation space (22) has at least one inflow (24) for the liquid, which inflow (24) is connected to a liquid circuit, in order to fill the compensation space (22) with the liquid.

4. Clutch device (2) according to one of the preceding claims, in which the piston (10) is an annular piston which is rotationally symmetrical with regard to the axial direction (14), the piston volume (12) being delimited in the axial direction (14) by the annular piston and counter to the axial direction (14) by a housing wall (6) of the clutch device (2).

5. Clutch device (2) according to Claim 4, in which a shape of those regions of the piston (10) and the housing wall (6) which adjoin the piston volume (12) in and counter to the axial direction (14) is adapted to each other in such a way that a ratio of a maximum piston volume (12) in the case of a piston (10) which is situated in an axial end position to a minimum piston volume (12) in the case of a piston (10) which is situated in an axial starting position is greater than 3.

6. Clutch device (2) according to one of the preceding claims, in which the piston volume (12) has at least one inflow (16) which is connected to a clutch circuit, in order to fill the piston volume (12) with the liquid.

7. Clutch device (2) according to one of the preceding claims, in which a first circumferential face which delimits the piston volume (12) to the outside in a radial direction (18) which is perpendicular with respect to the axial direction (14) is situated at a radial position which deviates by less than 5% from a radial position of a second circumferential face which delimits the compensation space (22) to the outside in the radial direction.

8. Clutch device (2) according to one of the preceding claims, **characterized in that** that bounding face of the compensation space (22) which faces the piston (10) is fixed in the axial direction (14) with regard to the piston (10), with the result that the said bounding face is moved together with the piston (10) in the axial direction (14).

9. Clutch device (2) according to one of the preceding claims, **characterized in that** a disc spring (32) is arranged in the compensation space (22).

10. Clutch device (2) according to Claims 8 and 9, in which that bounding face of the compensation space (22) which faces the piston (10) is pressed by the disc spring (32) against the piston (10) counter to the axial direction (14).

11. Clutch device (2) according to one of Claims 8 to 10, in which a compensation space cover which delimits the compensation space (22) in the axial direction (14) cannot be moved in the axial direction (14).

12. Clutch device (2) according to Claim 11, in which the compensation space cover is rotationally symmetrical with regard to the axial direction (14) and has a completely circumferential seal on the radially outer circumference.

13. Clutch device (2) according to Claim 11 or 12, in which a shape of those regions of the compensation space cover which adjoin the compensation space (22) in and counter to the axial direction (14) and of that bounding face of the compensation space (22) which faces the piston (10) is adapted to each other in such a way that a ratio of a maximum compensation space volume in the case of a piston (10) which is situated in the axial end position to a minimum compensation space volume in the case of a piston (10) which is situated in axial starting position is greater than 2 and smaller than 5.

## Revendications

1. Dispositif d'embrayage (2), comprenant les caractéristiques suivantes :
un piston (10) à commande hydraulique, pouvant être déplacé dans une direction axiale (14) par remplissage d'un volume de piston (12) avec un liquide ;
un empilage de disques (4) avec au moins une garniture de friction, pouvant être commandé par le piston (10) ;
un espace de compensation fermé (22) qui est disposé d'un côté du piston (10) opposé au volume de piston (12) et qui peut être rempli d'un liquide, un espace mort (26) étant disposé entre le volume de piston (12) et l'espace de compensation (22) dans la direction axiale (14), **caractérisé en ce que** l'espace mort (26) est étanchéifié à la fois par rapport à l'espace de compensation (22) et par rapport au volume de piston (12).

2. Dispositif d'embrayage (2) selon la revendication 1, **caractérisé en ce qu'**il s'agit d'un dispositif d'embrayage (2) avec des garnitures de friction humides.

3. Dispositif d'embrayage (2) selon l'une quelconque des revendications précédentes, **caractérisé en ce que** l'espace de compensation (22) présente au moins une alimentation (24) pour le liquide connectée à un circuit de liquide afin de remplir l'espace de compensation (22) avec le liquide.

4. Dispositif d'embrayage (2) selon l'une quelconque des revendications précédentes, dans lequel le piston (10) est un piston annulaire à symétrie de révolution par rapport à la direction axiale (14), le volume de piston (12) étant limité dans la direction axiale (14) par le piston annulaire et à l'encontre de la direction axiale (14) par une paroi de boîtier (6) du dispositif d'embrayage (2) .

5. Dispositif d'embrayage (2) selon la revendication 4, dans lequel une forme des régions du piston (10) et de la paroi de boîtier (6) délimitant le volume de piston (12) dans et à l'encontre de la direction axiale (14) sont adaptées l'une à l'autre de telle sorte qu'un rapport d'un volume de piston maximal (12) lorsqu'un piston (10) se trouve dans une position d'extrémité axiale à un volume de piston minimal (12) lorsqu'un piston (10) se trouve dans une position de départ axiale est supérieur à 3.

6. Dispositif d'embrayage (2) selon l'une quelconque des revendications précédentes, dans laquelle le volume de piston (12) présente au moins une alimentation (16) connectée à un circuit d'embrayage, afin de remplir le volume de piston (12) avec le liquide.

7. Dispositif d'embrayage (2) selon l'une quelconque des revendications précédentes, dans lequel une première surface d'enveloppe délimitant vers l'extérieur le volume de piston (12) dans une direction radiale (18) perpendiculaire à la direction axiale (14) se trouve dans une position radiale qui s'écarte de moins de 5 % d'une position radiale d'une deuxième surface d'enveloppe qui délimite vers l'extérieur dans la direction radiale l'espace de compensation (22).

8. Dispositif d'embrayage (2) selon l'une quelconque des revendications précédentes, **caractérisé en ce que** la surface de délimitation de l'espace de compensation (22) tournée vers le piston (10) est fixée dans la direction axiale (14) par rapport au piston (10) de telle sorte que celle-ci soit déplacée conjointement avec le piston (10) dans la direction axiale (14).

9. Dispositif d'embrayage (2) selon l'une quelconque des revendications précédentes, **caractérisé en ce qu'**un ressort Belleville (32) est disposé dans l'espace de compensation (22).

10. Dispositif d'embrayage (2) selon les revendications 8 et 9, dans lequel la surface de délimitation de l'espace de compensation (22) tournée vers le piston (10) est pressée à l'encontre de la direction axiale (14) contre le piston (10) par le ressort Belleville (32).

11. Dispositif d'embrayage (2) selon l'une quelconque des revendications 8 à 10, dans lequel un couvercle d'espace de compensation délimitant l'espace de compensation (22) dans la direction axiale (14) n'est pas mobile dans la direction axiale (14).

12. Dispositif d'embrayage (2) selon la revendication 11, dans lequel le couvercle d'espace de compensation présente une symétrie de révolution par rapport à la direction axiale (14) et présente, au niveau de la périphérie radialement extérieure, un joint d'étanchéité s'étendant sur toute la périphérie.

13. Dispositif d'embrayage (2) selon la revendication 11 ou 12, dans lequel une forme des régions du couvercle d'espace de compensation délimitant l'espace de compensation (22) dans et à l'encontre de la direction axiale (14) et de la surface de délimitation de l'espace de compensation (22) tournée vers le piston (10) sont adaptées l'une à l'autre de telle sorte qu'un rapport d'un volume de l'espace de compensation maximum lorsqu'un piston (10) se trouve dans la position d'extrémité axiale à un volume de l'espace de compensation minimale lorsqu'un piston (10) se trouve dans la position de départ axiale est supérieur à 2 et inférieur à 5.
